# EUROPEAN PATENT SPECIFICATION

(11) **EP 3 581 598 B1**
(45) Date of publication and mention of the grant of the patent: **13.09.2023**
(21) Application number: 18718176.3
(22) Date of filing: 05.02.2018
(51) Int. Cl.: C08G 8/10, C10L 9/08, C10B 53/02

(54) **BIOPOLYMERS AND PREPARATION METHOD**
BIOPOLYMERE UND PROZESS UM DIESE ZU ERHALTEN
BIOPOLYMÈRES ET PROCÉDÉ D'OBTENTION

(30) Priority: 08.02.2017 ES 201730146
(43) Date of publication of application: 18.12.2019
(73) Proprietor: Ingelia, S.L., 46010 Valencia (ES); Consejo Superior de Investigaciones Científicas (CSIC), 28006 Madrid (ES); Universitat Politècnica de València, 46022 Valencia (ES)
(72) Inventor: HITZL, Martin, 46010 Valencia (ES); RENZ, Michael, 46010 Valencia (ES); CORMA CANOS, Avelino, 46010 Valencia (ES); OLIVER-TOMAS, Borja, 46010 Valencia (ES)
(74) Representative: Isern Patentes y Marcas S.L.
(86) International application number: PCT/ES2018/070084
(87) International publication number: WO 2018/146360

(56) References cited:
- WO-A2-2014/080033
- US-A1- 2011 112 246
- WANG M ET AL: "Synthesis of phenol-formaldehyde resol resins using organosolv pine lignins", EUROPEAN POLYMER JOURNAL, PERGAMON PRESS LTD. OXFORD, GB, vol. 45, no. 12, 1 December 2009 (2009-12-01), pages 3380-3388, XP026764836, ISSN: 0014-3057, DOI: 10.1016/J.EURPOLYMJ.2009.10.003 [retrieved on 2009-10-09]

## Description

### Field of the invention

The present invention falls within the chemical industry field, and more specifically, the field of conversion of biomass into a solid polymer product with added value. The invention provides a method for obtaining biopolymers in which the quantity by weight corresponding to the phenol has been replaced at least partially by a lower-cost renewable waste material.

### Background of the invention

Phenolic resins represented an important development in the history of the chemical industry, and more specifically, in the chemical polymer industry (L. Pilato, "Phenolic resins: A century of progress", Springer, Berlin Heidelberg, 2010. DOI: 10.1007/978-3-642-04714-5). Worldwide production of these materials exceeds 5·10⁶ tons per year, and over time, many applications have been developed at the industrial scale, such as their use as adhesives, foams, or as components in abrasives or molds.

The production of phenolic resins is mainly based on phenol. Phenol is synthesized from fossil sources such as benzene, by alkylation and oxidation (Hock process). There is currently a need, on one hand, to reduce production costs and the end price of the polymer that is obtained, and on the other, it is also interesting from the environmental point of view to replace the raw material from fossil fuels with a renewable raw material. For this reason, the possibility of substituting phenol with cashew nut shell oil, also known as cashew nut shell liquid or CNSL, tannins and lignin has been studied (L. Pilato, "Phenolic resins: A century of progress", Springer, Berlin Heidelberg, 2010, pages 525-528). The first two are actually mixtures of phenolic compounds.

According to Taiwo *et al* (E.A. Taiwo, "Advances in Petrochemicals", Chapter 1 "Cashew Nut Shell Oil - A Renewable and Reliable Petrochemical FeedstocK", Ed. V. Patel, InTech, Rijeka, 2015, DOI: 10.5772 / 61096), cashew nut shell oil comprises mainly cardanol (i.e. 3-alkylphenol), cardol (i.e. 5-alkylresorcinol), anacardic acid (i.e. 5-alkylsalicylic acid) and 6-methylcardol. Moreover, tannins are made up of soluble polyphenol compounds that are found in many plants (Quideau et al, Angew. Chemie 2011, 50(3), pages 586-621). A large part of these compounds are monomer derivatives of phenol, or oligomers. Based on this, it is obvious that to carry out their substitution, compounds with a structure and reactivity similar to those of phenol will need to be found.

Lignin is considered to be a suitable substitute for phenols for reasons similar to the ones mentioned above. Its three-dimensional structure includes aromatic groups with methoxide and/or hydroxyl substituents, since plants synthesize lignin from coniferyl, synapyl and paracoumaryl alcohols (Collard et al, Renew. Sustain. Energy Rev. 2014, 38, pages 594-608).

All of these alternatives correspond to renewable materials, which have an added value because they are isolated and purified products (e.g. lignin), products extracted with solvent following a toasting step (e.g. cashew nut shell liquid) and/or have properties that are of interest for direct applications such as the use as antioxidants (e.g. tannins). Nevertheless, for this precise reason, these materials would not fulfil the economic requirement of reducing the cost of the raw material of the resin, which complicates their implementation in these processes, and therefore the use of these substances or materials in the industrial sector.

As a result of these needs present in the sector, numerous proposals have emerged in the bibliography in recent years. For example, Xu et al (RSC Adv. 2016, 6(47), pages 40975-40981) describes the obtainment of a phenolic resin foam from the bark of the birch tree, which could, *a priori,* be classified as a waste material. However, this is a method for obtaining an oil that is made up of phenolic substances, in which phenol is substituted with phenolic derivatives. Specifically, the obtainment of these derivatives by means of a liquefaction process is described, in which only the part of the biomass that contains the suitable structure, i.e. lignin, may be incorporated because the process comprises the breaking thereof into monomeric fragments. However, since the biopolymer also comprises cellulose and hemicellulose, the material is only partially utilized, which could cause problems of waste management, thus increasing the costs of the industrial process.

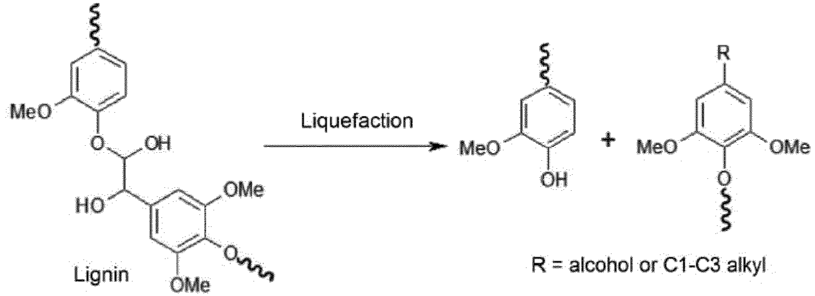

Wang et al (Eur. Polym. J. 2009, 45(12), pages 3380-3388) describes the incorporation of lignin into phenolic resins, where the lignin has been previously separated from the biomass, taking advantage of the natural structure in the plant, which is widely known. However, the use of lignin, as indicated earlier, requires a prior step of separation and purification, which in this case involves the extraction of white pine sawdust using the technique known in the state of the art as organosolv, using mixtures of hot ethanol-water co-solvents. This approximation would therefore also involve an additional cost associated with the prior processing of the lignin, which is required to convert it into the form suitable for substitution of the phenolic resins.

Based on this information, it can be determined that there is a need to find a new material in which the quantity by weight corresponding to the phenol is at least partially substituted, with a lower cost, because it is at an end point in the value chain, so that it is of interest for industrial processes from the economic point of view, while at the same time allowing the utilization of all of the renewable waste material, in order to avoid additional costs for management of the waste that cannot be integrated into the industrial process.

### Detailed description of the invention

The present invention provides a method for obtaining a biopolymer in which the quantity by weight corresponding to the phenol has been replaced at least partially by a lower-cost renewable waste material. Said procedure does not depend on the original composition of the biomass used as a raw material, unlike the existing methods in the state of the art, and also allows an elevated and efficient transformation of the carbon. Preferably, said process comprises the substitution of a quantity greater than or equal to 50% of the quantity by weight corresponding to the phenol with a renewable waste material; more preferably, with a quantity greater than or equal to 75% of the quantity by weight corresponding to the phenol with a renewable waste material.

Specifically, the present invention provides a procedure, based on hydrothermal carbonization, for the obtainment of a solid carbonaceous material from lignocellulosic biomass, regardless of the proportion between the biopolymers cellulose, hemicellulose, and lignin, and even in lignocellulosic biomass with exceptionally low lignin content. This makes it possible, for example, to transform renewable waste materials or biomasses with a high water content, such as orange peels or grass, into a product with added value, and it is applicable to all of the components of the organic fraction of solid urban waste (FORSU), to agro-industrial waste, or to pruning waste (including high woody content), among others. In addition, in the process of hydrothermal carbonization, the different raw materials do not necessarily have to be pure (e.g. from a single producer or from a single biomass source), but rather it is possible to process a mixture of biomass from different sites/plants, etc.

In the context of the present invention, "organic material" refers to the content of dry material except for ash.

The terms "biomass" or "renewable waste material" refer to any organic material that may be used to obtain biofuels, such as, for example, harvest waste, manure, or any other type of waste.

"Hydrothermal carbonization" or "HTC" is known in the state of the art as a process for biomass conversion in which the organic material is transformed into an aqueous solution by means of a thermal treatment. The resulting product can be incinerated or used for all of the uses traditionally reserved for lignite. This process transforms all of the carbon in the biomass into coal, without releasing carbon dioxide or methane, and leads to the obtainment of a biofuel with a high heating value (M. M. Titirici, "Sustainable Carbon Materials from Hydrothermal Processes", Ed. John Wiley & Sons Ltd., 2013. DOI: 10.1002/9781118622179). This process was developed by Friedrich Bergius in 1913, and over the years, it has been used for new applications, such as the conversion of landscaping waste (Titirici et al, Chem. Mater. 2007, 19, pages 4205-4212).

In a first embodiment, the present invention provides a procedure for the obtainment of a biopolymer characterized in that it comprises three steps:
(a) hydrothermal carbonization of the lignocellulosic biomass,
(b) addition of a total quantity of one or more phenolic compounds, and a total quantity of aldehyde, and
(c) treatment of the product obtained in step (b) at a temperature of between 50 and 250 °C.

Step (a) is carried out in the presence of a quantity of water comprised between 50% and 90% by weight with respect to the total weight of the mixture, preferably, a quantity of water comprised between 60% and 85% by weight with respect to the total weight of the mixture. The water may originate from the biomass or from other sources, wherein the hydrothermal carbonization is followed by a filtration process of the solid obtained, to provide a solid product wherein the moisture content is eliminated up to 50%; and optionally, wherein said solid product is subjected to a drying process, wherein the moisture content is reduced up to 95%. Also, it will be carried out at a temperature comprised between 180°C and 235°C and preferably at a pressure between 10 and 30 bar.

With respect to step (b), the quantity of one or more phenolic compounds that is added is comprised between 1% and 40% by weight with respect to the total weight of the solid obtained in step (a), on a dry basis. In addition, this step also comprises the addition of a total quantity of aldehyde corresponding to a molar ratio between the total quantity of one or more phenolic compounds and the total quantity of aldehyde comprised between 0.5:1.0 and 10.0:1.0; more preferably, said molar ratio between the total quantity of one or more phenolic compounds and the total quantity of aldehyde is comprised between 2.0:1.0 and 10.0:1.0. Specifically, this step (b) can be carried out at a temperature comprised between 50°C and 120°C.

Treatment step (c) is preferably carried out for a period of time comprised between 5 minutes and 24 hours; more preferably, said step (c) is carried out for a period of time comprised between 10 minutes and 4 hours.

Specifically, the present invention provides a method for obtaining biopolymers characterized in that it comprises:
(a) subjecting an aqueous suspension of lignocellulosic biomass to hydrothermal carbonization at a temperature comprised between 180°C and 235°C, in which the quantity of water present in said mixture is comprised between 50% and 90% by weight with respect to the total weight of the mixture, wherein the hydrothermal carbonization is followed by a filtration process of the solid obtained, to provide a solid product wherein the moisture content is eliminated up to 50%; and optionally, wherein said solid product is subjected to a drying process, wherein the moisture content is reduced up to 95%;
(b) adding a total quantity of one or more phenolic compounds comprised between 1% and 40% by weight with respect to the total weight of the solid obtained in step (a), and a total quantity of aldehyde corresponding to a molar ratio between the total quantity of one or more phenolic compounds and the total quantity of aldehyde comprised between 0.5:1.0 and 10.0:1.0, respectively, at a temperature comprised between 50°C and 120°C.
(c) subjecting the mixture obtained in step (b) to a temperature comprised between 100 and 250 °C.

In the present invention, said one or more phenolic compounds are selected from the group consisting of phenol, ortho-cresol, meta-cresol, para-cresol, catechol, resorcinol, hydroquinone, monoalkylphenols, dialkylphenols, trialkylphenols, tetraalkylphenols, monoalkyldihydroxybenzene, dialkyldihydroxybenzene, trialkyldihydroxybenzene, salicylic acid, alkyl salicylate, vanillin, eugenol, thymol, para-hydroxybenzoic acid, any derivative of the above compounds containing additional substituents selected from alkyl, alkoxy, hydroxy, carboxy, amino and nitro, and any mixture of the above compounds, wherein the alkyl group contains 1-12 carbon atoms.

Moreover, the aldehyde used in the method for obtaining a biopolymer of the present invention, is selected from the group consisting of aliphatic aldehydes with 1-8 carbon atoms, aromatic or heteroaromatic aldehydes, glyoxylic acid and glyoxal. Examples of aldehydes with 1-8 carbon atoms include, but are not limited to, acetaldehyde, propanal or butanal. Examples of aromatic or heteroaromatic aldehydes include, but are not limited to, furfural or 5-hydroxymethylfurfural. Preferably, said aldehyde is formaldehyde.

Step (a) of the method of the present invention may include a filtration after the hydrothermal carbonization process, which makes it possible to eliminate up to 50% of the moisture in the obtained solid; optionally, said step (a) may include the drying of the obtained solid, to eliminate up to 95% of the moisture present in said solid.

In a preferred embodiment, step (b) of the method of the present invention comprises the addition of a quantity of a solvent selected between water and an organic solvent.

Additionally, said step (b) may comprise the addition of a quantity of inorganic base, which is selected from the group consisting of alkaline hydroxides and alkaline earth hydroxides. Preferably, the inorganic base is sodium hydroxide, potassium hydroxide, or calcium hydroxide. Said quantity of inorganic base that may be added optionally in step (b) of the method of the invention is comprised between 0.1% and 10% by weight, with respect to the total organic material present in step (b), on a dry basis.

Additionally, the method of the invention may comprise a step (iii), after step (b) and before step (c), wherein a quantity of acid is added, preferably until a pH comprised between 5.5 and 6.5 is achieved. More preferably, said acid is acetic acid. Even more preferably, an organic solvent is added in step (b) that is a non-polar solvent, and step (iii) comprises a separation of the organic phase that will be used in step (c). Said non-polar solvent is preferably an alcohol, and more preferably, methanol or ethanol.

In a particular embodiment, the procedure of the invention may comprise a step (i), after step (a) and before step (b), of grinding the solid obtained in step (a) until particles with a specific average diameter that is less than or equal to 5 mm, preferably less than or equal to 1 mm, is obtained.

In another specific embodiment, the procedure of the invention may comprise a step (ii), after step (a) and before step (b), wherein the solid is heated to a temperature comprised between 100°C and 800°C. Preferably, this thermal treatment temperature is between 200°C and 800°C, and still more preferably, between 350°C and 650°C. Optionally, the heating carried out in step (ii) is carried out in the absence of oxygen.

Over the course of said step (ii), it is possible to recover a fraction or quantity of liquid that may provide the total quantity of one or more phenolic compounds used in step (b). In a preferred embodiment, only one part of this liquid is used, which may be separated by physical separation and/or purification processes to concentrate the aromatic part of the liquid obtained in the thermal treatment of the carbonized biomass, such as distillation, decanting, centrifuging, precipitation, extraction, combinations thereof, or any other method of separation and/or purification that is evident for a person skilled in the art.

With respect to steps (i) and (ii), both after step (a), and before step (b), preferably said grinding step (i) is carried out prior to the thermal treatment step (ii); however, it will be obvious to a person skilled in the art that alternatively, step (ii) may be carried out prior to step (i) if necessary.

Throughout the description and the claims, the word "comprises" and its variations are not intended to exclude other technical characteristics, additives, components, or steps. For experts in the state of the art, additional objects, advantages, and characteristics of the invention will be evident from the analysis of the description or may be learned from the examples of the invention. The following examples and drawings are provided for the purposes of illustration and are in no way intended to limit the present invention. In addition, the invention covers all of the possible combinations of the specific and preferred embodiments of the present document.

### Brief description of the figures

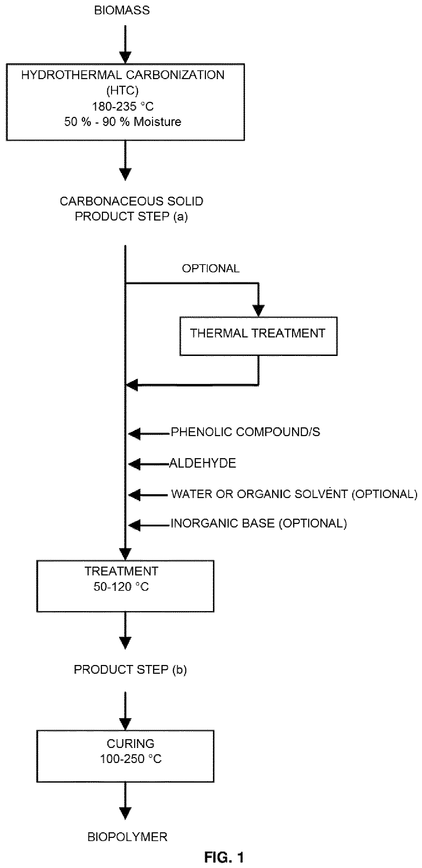

Figure 1 shows the diagram of a preferred embodiment of the method of obtaining biopolymers of the present invention.

### Examples

### Example 1: Hydrothermal carbonization of orange peel.

In a process of hydrothermal carbonization, 12.250 kg of orange peel waste with a water content of 84% was used. After a treatment at 201-212 ° C, 723 kg of a carbonaceous solid were obtained (product step (a)).

### Example 2: Thermal treatment of the solid obtained in example 1.

Approximately 100 g of the carbonaceous solid obtained in example 1 was used in the thermal treatment. The solid was used in the form of pellets in a quartz tubular reactor, and was secured by a porous plate. A stream of nitrogen was applied from top to bottom, and the solid was heated for 2 h to 600°C with a ramp of 6 degrees/min. A 49% solid (product step (a)) was obtained, and 20% liquid was collected at the reactor outlet at ambient temperature, which was treated before being used in step (b).

### Example 3: Production of a biopolymer from a carbonaceous solid (with ethanol; 75% coal, 25% phenol).

7.5 g of the powdered carbonaceous solid obtained in example 2 was placed in a flask with 2.5 g of phenol, 10 mL of ethanol and 0.5 g of NaOH. The mixture was heated to 80°C and 11.2 mL of 37% formol was added drop by drop. After 4 h, the mixture was allowed to cool and the ethanol was distilled. A viscous black liquid (product of step (b)) was obtained. This liquid was deposited on a sheet of aluminum foil and heated in a silicone bath at 160°C. A solid product (product step (c)) was obtained with satisfactory stability to be used for the production of utensils.

It should be noted that in the context of the examples of the present invention, "satisfactory stability" shall be understood to refer to the resistance of the solid product to fracture or rupture when the end user applies standard force with their hands, given that the end use of the utensils obtained through these example is human use.

### Example 4: Production of a biopolymer from a carbonaceous solid (with ethanol; 85% coal, 15% phenol).

7.5 g of the powdered carbonaceous solid obtained in example 2 was placed in a flask with 1.3 g of phenol, 10 mL of ethanol and 0.5 g of NaOH. The mixture was heated to 80°C and 11.2 mL of 37% formol was added drop by drop. After 4 h, the mixture was allowed to cool and the ethanol was distilled. A viscous black liquid (product of step (b)) was obtained. This liquid was deposited on a sheet of aluminum foil and heated in a silicone bath at 160°C. A solid product (product step (c)) was obtained with satisfactory stability to be used for the production of utensils.

### Example 5: Production of a biopolymer from a carbonaceous solid (with ethanol; 90% coal, 10% phenol).

7.5 g of the powdered carbonaceous solid obtained in example 2 was placed in a flask with 0.84 g of phenol, 10 mL of ethanol and 0.5 g of NaOH. The mixture was heated to 80°C and 11.2 mL of 37% formol was added drop by drop. After 4 h, the mixture was allowed to cool and the ethanol was distilled. A viscous black liquid (product of step (b)) was obtained. This liquid was deposited on a sheet of aluminum foil and heated in a silicone bath at 160°C. A solid product (product step (c)) was obtained with satisfactory stability to be used for the production of utensils with a short lifetime.

### Example 6: Production of a biopolymer from a carbonaceous solid (without organic solvent; 66% coal, 33% phenol).

8 g of the powdered carbonaceous solid obtained in example 2 was placed in a flask with 4 g of phenol, 3 g of water and 1 g of 50% NaOH solution in water. The mixture was heated to the boiling point of ethanol for 1 h and 13.5 g of 37% formol was added drop by drop. After 2 h at 85 °C (temperature of the bath) it was allowed to cool to 60 °C. Acetic acid was added to adjust the pH to 5.5-6.5. The product separated into two phases after acidification, an aqueous phase and a dark-colored, viscous phase. The two phases were separated, and the organic phase (product step (b)) was deposited on a sheet of aluminum foil and heated in a silicone bath at 160°C. A solid product (product step (c)) was obtained with satisfactory stability to be used for the production of utensils.

### Example 7: Production of a biopolymer from a carbonaceous solid (without organic solvent; 50% coal, 20% phenol).

8 g of the powdered carbonaceous solid obtained in example 2 was placed in a flask with 2.0 g of phenol, 3 g of water and 1 g of 50% NaOH solution in water. The mixture was heated to the boiling point of ethanol for 1 h and 13.5 g of 37% formol was added drop by drop. After 2 h at 85 °C (temperature of the bath) it was allowed to cool to 60 °C. Acetic acid was added to adjust the pH to 5.5-6.5. The product separated into two phases after acidification, an aqueous phase and a dark-colored, viscous phase. The two phases were separated, and the organic phase (product step (b)) was deposited on a sheet of aluminum foil and heated in a silicone bath at 160°C. A solid product (product step (c)) was obtained with satisfactory stability to be used for the production of utensils with a short lifetime.

### Example 8: Production of a biopolymer from a carbonaceous solid (with ethanol; 75% coal, 25% phenol).

7.5 g of the powdered carbonaceous solid obtained in example 1 was placed in a flask with 2.5 g of phenol, 10 mL of ethanol and 0.5 g of NaOH. The mixture was heated to 80°C and 11.2 mL of 37% formol was added drop by drop. After 4 h, the mixture was allowed to cool and the ethanol was distilled. A viscous black liquid (product of step (b)) was obtained. This liquid was deposited on a sheet of aluminum foil and heated in a silicone bath, first at 120°C and then at 160°C. A solid product (product step (c)) was obtained with satisfactory stability to be used for the production of utensils. The distribution of the carbonaceous material was different from that of the material in example 3, as determined by the visual observation of the final product, which in this case is less uniformly colored, with a light gray color in the central zone and darker tones on the edges.

### Example 9: Production of a biopolymer from a biomass (with ethanol; 75% coal, 25% phenol).

Pruning waste was used in a hydrothermal carbonization process at an industrial scale. After a treatment at 200-215°C, a carbonaceous solid was obtained (product step (a)). 7.5 g of the powdered carbonaceous solid obtained previously (process fines) was placed in a flask with 2.5 g of phenol, 10 mL of ethanol and 0.5 g of NaOH. The mixture was heated to 80°C and 11.2 mL of 37% formol was added drop by drop. After 4 h, the mixture was allowed to cool and the ethanol was distilled. A viscous black liquid (product of step (b)) was obtained. This liquid was deposited on a sheet of aluminum foil and heated in a silicone bath, first at 120°C and then at 160°C. A solid product (product step (c)) was obtained with satisfactory stability to be used for the production of utensils. The distribution of the carbonaceous material was different from the distribution in example 3.

### Example 10: Production of a biopolymer from a carbonaceous solid (with ethanol; 75% coal, 25% organic volatile fraction of the liquid obtained in example 2).

The liquid obtained in example 2 was centrifuged to completely separate the organic phase and the aqueous phase and the organic phase was recovered. The volatile fraction of the organic liquid was distilled. 7.5 g of the powdered carbonaceous solid obtained in example 2 was placed in a flask with 2.5 g of the volatile organic liquid produced previously, 10 mL of ethanol and 0.5 g of NaOH. The mixture was heated to 80°C and 11.2 mL of 37% formol was added drop by drop. After 4 h, the mixture was allowed to cool and the ethanol was distilled. A viscous black liquid (product of step (b)) was obtained. This liquid was deposited on a sheet of aluminum foil and heated in a silicone bath, first at 120°C and then at 160°C. A solid product (product step (c)) was obtained with satisfactory stability to be used for the production of utensils.

### Example 11: Production of a biopolymer from a carbonaceous solid (with ethanol; 75% coal, 25% of a liquid obtained from the coal).

7.5 g of the powdered carbonaceous solid obtained in example 2 was placed in a flask with 2.5 g of the liquid obtained previously, 10 mL of ethanol and 0.5 g of NaOH. The mixture was heated to 80°C and 11.2 mL of 37% formol was added drop by drop. After 4 h, the mixture was allowed to cool and the ethanol was distilled. A viscous black liquid (product of step (b)) was obtained. This liquid was deposited on a sheet of aluminum foil and heated in a silicone bath at 160°C. A solid product (product step (c)) was obtained with satisfactory stability to be used for the production of utensils.

## Claims

1. A method for obtaining a biopolymer **characterized in that** it comprises:
(a) subjecting an aqueous suspension of lignocellulosic biomass to hydrothermal carbonization at a temperature comprised between 180°C and 235°C, in which the quantity of water present in said mixture is comprised between 50% and 90% by weight with respect to the total weight of the mixture, followed by a filtration process of the solid obtained, to provide a solid product wherein the moisture content is eliminated up to 50%; and optionally, wherein said solid product is subjected to a drying process, wherein the moisture content is reduced up to 95%;
(b) adding a total quantity of one or more phenolic compounds comprised between 1% and 40% by weight with respect to thetotal weight of the solid obtained in step (a), on a dry basis, and at total quantity of aldehyde corresponding to a molar ratio between the total quantity of one or more phenolic compounds and the total quantity of aldehyde comprised between 0.5:1.0 and 10.0:1.0, respectively, at a temperature comprised between 50°C and 120°C;
(c) subjecting the mixture resulting from step (b) to a temperature comprised between 100 and 250 °C.

2. The method according to claim 1, **characterized in that** said one or more phenolic compounds are selected from the group consisting of phenol, ortho-cresol, meta-cresol, para-cresol, catechol, resorcinol, hydroquinone, monoalkylphenols, dialkylphenols, trialkylphenols, tetraalkylphenols, monoalkyldihydroxybenzene, dialkyldihydroxybenzene, trialkyldihydroxybenzene, salicylic acid, alkyl salicylate, vanillin, eugenol, thymol, para-hydroxybenzoic acid, any derivative of the above compounds containing additional substituents selected from alkyl, alkoxy, hydroxy, carboxy, amino and nitro, and any mixture of the above compounds, wherein the alkyl group contains 1-12 carbon atoms.

3. The method according to claim 1 or 2, **characterized in that** said aldehyde is selected from the group consisting of aliphatic aldehydes with 1-8 carbon atoms, aromatic or heteroaromatic aldehydes, glyoxylic acid and glyoxal.

4. The method according to claim 3, **characterized in that** said aldehyde is formaldehyde.

5. The method according to any of the claims 1-4, **characterized in that** in step (b) a quantity of a solvent selected between water and an organic solvent is added.

6. The method according to any of the claims 1-5, **characterized in that** step (b) comprises the addition of a quantity of inorganic base.

7. The method according to claim 6, **characterized in that** said inorganic base is selected from the group consisting of alkaline hydroxides and alkaline earth hydroxides.

8. The method according to claim 6 or 7, **characterized in that** said quantity of inorganic base is comprised between 0.1% and 10% by weight, with respect to the total organic material present in stage (b), on a dry basis.

9. The method according to any of the claims 5-8, **characterized in that** it comprises a step (iii), after step (b) and before step (c), wherein a quantity of acid is added until a pH comprised between 5.5 and 6.5 is achieved.

10. The method according to claim 9, **characterized in that** an organic solvent is added in step (b) that is a non-polar solvent, and step (iii) comprises a separation of the organic phase that will be used in step (c).

11. The method according to any of the claims 1-10, **characterized in that** it comprises a step (i), after step (a) and before step (b), of grinding the solid obtained in step (a) until particles with a specific average diameter that is less than or equal to 5 mm, preferably less than or equal to 5 mm are obtained.

12. The method according to any of the claims 1-11, **characterized in that** it comprises a step (ii), after step (a) and before step (b), wherein the solid is heated to a temperature comprised between 100°C and 800°C.

13. The method according to claim 12, **characterized in that** the temperature of said step (ii) is comprised between 350°C and 650°C.

14. The method according to claim 12 or 13, **characterized in that** said step (ii) is carried out in the absence of oxygen.

15. The method according to any of the claims 12-14, **characterized in that** the total quantity of one or more phenolic compounds used in step (b) is obtained from a quantity of liquid separated from the product obtained in step (ii).

## Patentansprüche

1. Verfahren zum Erhalt eines Biopolymers, **dadurch gekennzeichnet, dass** es Folgendes umfasst:
(a) Unterziehen einer wässrigen Suspension von Lignocellulose-Biomasse einer hydrothermalen Karbonisierung bei einer Temperatur zwischen 180 °C und 235 °C, wobei die in der Mischung vorhandene Wassermenge zwischen 50 und 90 Gewichts-%, bezogen auf das Gesamtgewicht der Mischung, beträgt, gefolgt von einem Filtrationsprozess des erhaltenen Feststoffs, um ein Feststoffprodukt bereitzustellen, wobei der Feuchtigkeitsgehalt um bis zu 50 % eliminiert wird; und wobei das Feststoffprodukt optional einem Trocknungsprozess unterzogen wird, wobei der Feuchtigkeitsgehalt um bis zu 95 % reduziert wird;
(b) Zugeben einer Gesamtmenge einer oder mehrerer Phenolverbindungen zwischen 1 und 40 Gewichts-%, bezogen auf das Gesamtgewicht des in Schritt (a) erhaltenen Feststoffs, auf Trockenbasis und einer Gesamtmenge Aldehyd, die einem Molverhältnis zwischen der Gesamtmenge einer oder mehreren Phenolverbindungen und der Gesamtmenge Aldehyd von 0,5:1,0 bzw. 10,0:1,0 bei einer Temperatur zwischen 50 °C und 120 °C entsprechen;
(c) Unterziehen der aus Schritt (b) resultierenden Mischung einer Temperatur zwischen 100 und 250 °C.

2. Verfahren gemäß Anspruch 1, **dadurch gekennzeichnet, dass** die eine oder die mehreren Phenolverbindungen ausgewählt sind aus der Gruppe, bestehend aus Phenol, ortho-Cresol, meta-Cresol, para-Cresol, Catechol, Resorcinol, Hydrochinon, Monoalkylphenolen, Dialkylphenolen, Trialkylphenolen, Tetraalkylphenolen, Monoalkyldihydroxybenzol, Dialkyldihydroxybenzol, Trialkyldihydroxybenzol, Salicylsäure, Alkylsalicylat, Vanillin, Eugenol, Thymol, para-Hydroxybenzoesäure, jeglichem Derivat der oben genannten Verbindungen, das zusätzliche Substituenten, ausgewählt aus Alkyl, Alkoxy, Hydroxy, Carboxy, Amino und Nitro, enthält, und jeglicher Mischung einer der oben genannten Verbindungen, wobei die Alkylgruppe 1-12 Kohlenstoffatome enthält.

3. Verfahren gemäß Anspruch 1 oder 2, **dadurch gekennzeichnet, dass** das Aldehyd ausgewählt ist aus der Gruppe, bestehend aus aliphatischen Aldehyden mit 1-8 Kohlenstoffatomen, aromatischen oder heteroaromatischen Aldehyden, Glyoxylsäure und Glyoxal.

4. Verfahren gemäß Anspruch 3, **dadurch gekennzeichnet, dass** das Aldehyd Formaldehyd ist.

5. Verfahren gemäß einem der Ansprüche 1-4, **dadurch gekennzeichnet, dass** in Schritt (b) eine Menge eines Lösemittels, ausgewählt aus Wasser und einem organischen Lösemittel, zugegeben wird.

6. Verfahren gemäß einem der Ansprüche 1-5, **dadurch gekennzeichnet, dass** Schritt (b) die Zugabe einer Menge anorganischer Base umfasst.

7. Verfahren gemäß Anspruch 6, **dadurch gekennzeichnet, dass** die anorganische Base aus der Gruppe, bestehend aus Alkalihydroxiden und Erdalkalihydroxiden, ausgewählt ist.

8. Verfahren gemäß Anspruch 6 oder 7, **dadurch gekennzeichnet, dass** die Menge anorganischer Base zwischen 0,1 und 10 Gewichts-%, bezogen auf das gesamte in Stufe (b) vorhandene organische Material, auf Trockenbasis beträgt.

9. Verfahren gemäß einem der Ansprüche 5-8, **dadurch gekennzeichnet, dass** es nach Schritt (b) und vor Schritt (c) einen Schritt (iii) umfasst, wobei eine Menge Säure zugegeben wird, bis ein pH-Wert zwischen 5,5 und 6,5 erreicht ist.

10. Verfahren gemäß Anspruch 9, **dadurch gekennzeichnet, dass** in Schritt (b) ein organisches Lösemittel zugegeben wird, das ein unpolares Lösemittel ist, und Schritt (iii) eine Abtrennung der organischen Phase umfasst, die in Schritt (c) verwendet wird.

11. Verfahren gemäß einem der Ansprüche 1-10, **dadurch gekennzeichnet, dass** es nach Schritt (a) und vor Schritt (b) einen Schritt (i) des Mahlens des in Schritt (a) erhaltenen Feststoffs umfasst, bis Partikel mit einem spezifischen durchschnittlichen Durchmesser, der kleiner als oder gleich 5 mm, vorzugsweise kleiner als oder gleich 5 mm ist, erhalten werden.

12. Verfahren gemäß einem der Ansprüche 1-11, **dadurch gekennzeichnet, dass** es nach Schritt (a) und vor Schritt (b) einen Schritt (ii) umfasst, wobei der Feststoff auf eine Temperatur zwischen 100 °C und 800°C erwärmt wird.

13. Verfahren gemäß Anspruch 12, **dadurch gekennzeichnet, dass** die Temperatur des Schritts (ii) zwischen 350 °C und 650 °C liegt.

14. Verfahren gemäß Anspruch 12 oder 13, **dadurch gekennzeichnet, dass** Schritt (ii) in Abwesenheit von Sauerstoff durchgeführt wird.

15. Verfahren gemäß einem der Ansprüche 12-14, **dadurch gekennzeichnet, dass** die Gesamtmenge einer oder mehrerer in Schritt (b) verwendeter Phenolverbindungen aus einer Flüssigkeitsmenge erhalten wird, die von dem in Schritt (ii) erhaltenen Produkt abgetrennt wird.

## Revendications

1. Procédé permettant d'obtenir un biopolymère **caractérisé en ce qu'**il comprend :
(a) la fait de soumettre une suspension aqueuse de biomasse lignocellulosique à une carbonisation hydrothermale à une température comprise entre 180 °C et 235 °C, dans laquelle la quantité d'eau présente dans ledit mélange est comprise entre 50 % et 90 % en poids par rapport au poids total du mélange, suivie d'un processus de filtration du solide obtenu, pour fournir un produit solide, dans lequel jusqu'à 50 % de la teneur en humidité est éliminée ; et éventuellement, dans lequel ledit produit solide est soumis à un processus de séchage, dans lequel la teneur en humidité est réduite à hauteur de jusqu'à 95 % ;
(b) l'ajout d'une quantité totale d'un ou plusieurs composés phénoliques comprise entre 1 % et 40 % en poids par rapport au poids total du solide obtenu à l'étape (a), sur une base sèche, et d'une quantité totale d'aldéhyde correspondant à un rapport molaire entre la quantité totale d'un ou plusieurs composés phénoliques et la quantité totale d'aldéhyde compris entre 0,5:1,0 et 10,0:1,0, respectivement, à une température comprise entre 50 °C et 120 °C ;
(c) le fait de soumettre le mélange résultant de l'étape (b) à une température comprise entre 100 et 250 °C.

2. Procédé selon la revendication 1, **caractérisé en ce que** lesdits un ou plusieurs composés phénoliques sont choisis dans le groupe constitué par le phénol, l'ortho-crésol, le méta-crésol, le para-crésol, le catéchol, le résorcinol, l'hydroquinone, les monoalkylphénols, les dialkylphénols, les trialkylphénols, les tétraalkylphénols, un monoalkyldihydroxybenzène, un dialkyldihydroxybenzène, un trialkyldihydroxybenzène, l'acide salicylique, un salicylate d'alkyle, la vanilline, l'eugénol, le thymol, l'acide para-hydroxybenzoïque, tout dérivé des composés ci-dessus contenant des substituants supplémentaires choisis parmi les substituants alkyle, alcoxy, hydroxy, carboxy, amino et nitro et tout mélange des composés ci-dessus, dans lequel le groupe alkyle contient 1 à 12 atomes de carbone.

3. Procédé selon la revendication 1 ou 2, **caractérisé en ce que** ledit aldéhyde est choisi dans le groupe constitué par les aldéhydes aliphatiques ayant 1 à 8 atomes de carbone, les aldéhydes aromatiques ou hétéroaromatiques, l'acide glyoxylique et le glyoxal.

4. Procédé selon la revendication 3, **caractérisé en ce que** ledit aldéhyde est le formaldéhyde.

5. Procédé selon l'une quelconque des revendications 1 à 4, **caractérisé en ce qu'**à l'étape (b) une quantité d'un solvant choisi entre l'eau et un solvant organique est ajoutée.

6. Procédé selon l'une quelconque des revendications 1 à 5, **caractérisé en ce que** l'étape (b) comprend l'ajout d'une quantité de base inorganique.

7. Procédé selon la revendication 6, **caractérisé en ce que** ladite base inorganique est choisie dans le groupe constitué par les hydroxydes de métaux alcalins et les hydroxydes de métaux alcalinoterreux.

8. Procédé selon la revendication 6 ou 7, **caractérisé en ce que** ladite quantité de base inorganique est comprise entre 0,1 % et 10 % en poids, par rapport à la matière organique totale présente à la phase (b), sur une base sèche.

9. Procédé selon l'une quelconque des revendications 5 à 8, **caractérisé en ce qu'**il comprend une étape (iii), après l'étape (b) et avant l'étape (c), dans laquelle une quantité d'acide est ajoutée jusqu'à ce qu'un pH compris entre 5,5 et 6,5 soit atteint.

10. Procédé selon la revendication 9, **caractérisé en ce que** l'on ajoute à l'étape (b) un solvant organique qui est un solvant non polaire et l'étape (iii) comprend une séparation de la phase organique qui sera utilisée à l'étape (c).

11. Procédé selon l'une quelconque des revendications 1 à 10, **caractérisé en ce qu'**il comprend une étape (i), après l'étape (a) et avant l'étape (b), consistant à broyer le solide obtenu à l'étape (a) jusqu'à ce que des particules ayant un diamètre moyen déterminé qui est inférieur ou égal à 5 mm, de préférence inférieur ou égal à 5 mm soient obtenues.

12. Procédé selon l'une quelconque des revendications 1 à 11, **caractérisé en ce qu'**il comprend une étape (ii), après l'étape (a) et avant l'étape (b), dans laquelle le solide est chauffé à une température comprise entre 100 °C et 800 °C.

13. Procédé selon la revendication 12, **caractérisé en ce que** la température de ladite étape (ii) est comprise entre 350 °C et 650 °C.

14. Procédé selon la revendication 12 ou 13, **caractérisé en ce que** ladite étape (ii) est mise en oeuvre en l'absence d'oxygène.

15. Procédé selon l'une quelconque des revendications 12 à 14, **caractérisé en ce que** la quantité totale d'un ou plusieurs composés phénoliques utilisés à l'étape (b) est obtenue à partir d'une quantité de liquide séparé du produit obtenu à l'étape (ii).
